# EUROPEAN PATENT APPLICATION

(11) **EP 4 538 329 A1**
(43) Date of publication of application: **16.04.2025**
(21) Application number: 23202518.9
(22) Date of filing: 09.10.2023
(51) Int. Cl.: C09B 69/10, C09D 11/023, C09D 11/328, C09D 11/36

(54) **METHOD FOR SYNTHETIZING POLYMERIC DYES**

(71) Applicant: Dover Europe Sàrl, 1214 Vernier (CH)
(72) Inventor: FOURNIER, Lucie, 34170 Castelnau le Lez (FR); FALCO, Guillaume, 1800 Vevey (CH)
(74) Representative: PGA S.p.A., Milano, Succursale di Lugano

(57) **Abstract**

The present invention relates to a method for synthetizing a polymeric dye by polymerization of polymerizable monomers bearing a polymerizable function, such as acrylate, methacrylate, acrylamide, or methacrylamide, and a chromophore function, wherein the polymerization is conducted in a solvent chosen from acetonitrile or a mixture of methyl ethyl ketone and ethanol and the purification of the resulting polymeric dye is conducted with a solvent chosen from di-isopropyl ether, methyl tert-butyl ether, dimethyl carbonate, ethyl acetate, and water. The invention also relates to the resulting polymeric dye and to ink compositions comprising it.

## Description

### FIELD OF THE INVENTION

The present invention relates to a method for synthetizing a polymeric dye as well as to a polymeric dye obtained therefrom and to related ink compositions comprising it.

More in particular, the present invention relates to a method for synthetizing a polymeric dye by polymerization of polymerizable monomers bearing a polymerizable function, such as acrylate, methacrylate, acrylamide, or methacrylamide, and a chromophore function, wherein the polymerization is conducted in a solvent chosen from acetonitrile or a mixture of methyl ethyl ketone and ethanol and the purification of the resulting polymeric dye is conducted in a solvent chosen from di-isopropyl ether, methyl tert-butyl ether, dimethyl carbonate, ethyl acetate, and water.

### STATE OF THE ART

During inkjet printing, the ink is typically ejected through a component of a printhead (e.g., an array of nozzles) onto a substrate. Many solvent-soluble dyes currently used in the inkjet printing have been identified as materials hazardous for human and environment with long-term compliance issues.

These dyes are typically coordinated to heavy metals, which could contribute to the toxicity of such dyes.

Current black dyes used for inkjet printing are organometallic complexes. Organic part contains diazo function, and the metallic cation is trivalent chromium ion.

Several colored dyes, such as blue and red dyes, also include metallic cations, like copper, cobalt and iron.

This type of chemistry raised some concerns for human health and some dyes are already classified CMR (Carcinogenic, Mutagenic, Reprotoxic).

As chemicals could migrate through the packaging substrate and therefore be found in the product, CMR chemicals (as dyes) are banned from sensitive markets such as from food, beverage, pharmaceutical, and cosmetic industries.

As described by the REACh regulations, it would be desirable to have a polymeric dye because high molecular weight molecules such as polymers do not migrate through packaging substrates and would be considered safe for sensitive markets such as from food, beverage, pharmaceutical, and cosmetic industries.

Colored polymeric dyes are known in the art such as for example, from US7732509B2, US7273897B2, WO03089533, WO9961533, DE19651689, CN108071023B and CN101787222A. However, such documents mainly disclose water-soluble polymeric dyes.

Thus, there is a need to develop organic solvent-soluble polymeric dyes that do not contain heavy metals.

### SUMMARY OF THE INVENTION

The Applicant has faced the problem of developing organic solvent-soluble polymeric dyes that do not contain heavy metals.

After extensive experimentation, the Applicant has found a solution allowing to get an organic solvent-soluble polymeric dye that does not contain heavy metals.

The Applicant has filed a co-pending European patent application no. 23158134.9 claiming a method for synthetizing a polymeric dye comprising the steps of:
(1) functionalizing a dye with a polymerizable function to get a polymerizable monomer dye,
(2) copolymerizing at least one polymerizable monomer dye with polymerizable monomers, and
(3) recovering the resulting polymeric dye.

EP application no. 23158134.9 disclosed a copolymerizing step (2) conducted in dimethylformamide (DMF) and a recovering step (3) comprising a purification step conducted with pentane, hexane, methanol, diethyl ether, or mixture thereof.

Continuing the experimentation, the Applicant has faced the problem of avoiding the use of CMR chemicals like DMF and methanol, and the problem of avoiding the use of dangerous solvents, with high flammability and explosion risk, like diethyl ether.

After several tests, the Applicant has surprisingly found that by specifically selecting acetonitrile or a mixture of methyl ethyl ketone and ethanol as a solvent for the copolymerizing step (2) together with specifically selecting di-isopropyl ether or methyl tert-butyl ether or dimethyl carbonate or ethyl acetate or water as a solvent for the purification step of the recovered polymeric dye, in addition of solving the above mentioned problems of toxicity and hazard, an unexpected yield increase was also obtained.

Accordingly, in one aspect, the present invention relates to a method for synthetizing a polymeric dye comprising the steps of:
(1) reacting a dye comprising a first reactive function with a polymerizable monomer comprising a second reactive function to get a polymerizable monomer dye having any one of the following formulas (I) to (III) and (V): 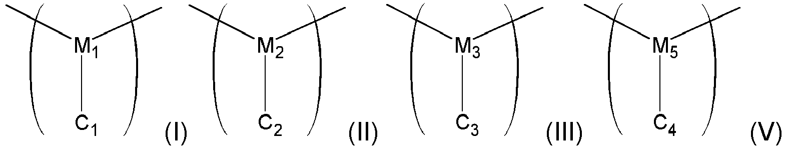 wherein M1, M2, M3, and M5, equal or different each other, are reactive monomers, and C1 to C4, different each other, are chromophore units,
(2) copolymerizing at least one polymerizable monomer dye (I) to (III) and (V) with a polymerizable monomer having the following formula (IV) 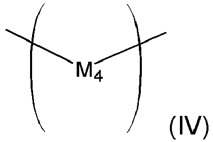 wherein M4 is a reactive monomer, and
(3) recovering the resulting polymeric dye,
wherein said copolymerizing step (2) is conducted in a solvent chosen from acetonitrile or a mixture of methyl ethyl ketone and ethanol, and said recovering step (3) comprises a purification step conducted with a solvent chosen from di-isopropyl ether, methyl tert-butyl ether, dimethyl carbonate, ethyl acetate, and water.

In another aspect, the present invention relates to the polymeric dye obtained with the synthetizing method according to the first aspect of the present invention. Such a polymeric dye can be used as a dye in a continuous inkjet (CIJ) printing process or a drop-on-demand (DOD) printing process (e.g., a thermal inkjet (TIJ) printing process) or a hot melt (HM) inkjet printing process. Compared to conventional colorants (e.g., carbon black and metal complexed dyes) used in printing processes (e.g., CIJ, DOD, TIJ, or HM), the polymeric dye of the present invention can form an ink composition without including any toxic metallic cation and with fair fastness, while still possessing excellent stability, printability, solubility in organic solvent, and adhesion to a variety of substrates.

In another aspect, the present invention relates to an ink composition that includes the polymeric dye of the present invention, and an organic solvent. The composition can be a solution.

The polymeric dye of the present invention can be in an amount of from about 1% to about 70% by weight, preferably from 3% to 50% by weight, with respect to the weight of the ink composition.

In another aspect, the present invention relates to a product that includes a substrate (e.g., a cardboard, a glass, a metal, or a film) and a solid ink defining an image on the substrate, in which the solid ink includes the ink composition described herein.

In another aspect, the present invention relates to a printing process that includes ejecting the ink composition described herein from a printhead in an inkjet printer onto a substrate to form an image.

### DETAILED DESCRIPTION OF THE INVENTION

While this invention can be implemented in many different forms, specific embodiments thereof are shown in the drawings and will be further described herein with the understanding that the present disclosure is an exemplification of the principles of the invention and is not intended to limit the invention to the specific embodiments illustrated.

### Method for Synthetizing Polymeric dye

The method for synthetizing a polymeric dye according to the present invention comprises the steps of:
(1) reacting a dye comprising a first reactive function with a polymerizable monomer comprising a second reactive function to get a polymerizable monomer dye having any one of the following formulas (I) to (III) and (V): 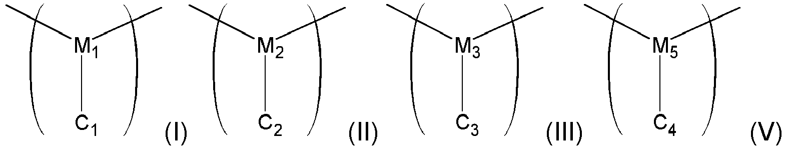 wherein M1, M2, M3, and M5, equal or different each other, are reactive monomers, and C1 to C4, different each other, are chromophore units,
(2) copolymerizing at least one polymerizable monomer dye (I) to (III) and (V) with a polymerizable monomer having the following formula (IV) 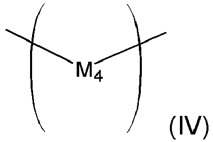 wherein M4 is a reactive monomer, and
(3) recovering the resulting polymeric dye,
wherein said copolymerizing step (2) is conducted in a solvent chosen from acetonitrile or a mixture of methyl ethyl ketone and ethanol, and said recovering step (3) comprises a purification step conducted with a solvent chosen from di-isopropyl ether, methyl tert-butyl ether, dimethyl carbonate, ethyl acetate, and water.

The polymerizable monomer dye can be prepared by synthetic methods described herein or those known in the art.

The polymerizable monomer dye can be easily prepared by reaction of one reactive function, such as a hydroxyl group, an amine group, or a carboxyl group, of a dye with a reactive function of a polymerizable monomer, such as a carboxylic group, an acyl chloride, an anhydride group, an ester group, or a hydroxyl group, or an amine group.

Any dye as described above can be used provided that it contains at least one reactive function able to form a covalent bond with a reactive function of a polymerizable monomer. In some embodiments, when a dye comprises alkaline or alkaline-earth sulfonate or carboxylate groups, the alkaline or alkaline-earth ion is preliminary replaced with a tetra alkyl ammonium group, such as for example, a tetra butyl ammonium group, a tetra hexyl ammonium group, or a tetra octyl ammonium group, for improving the solubility in organic solvent while decreasing the solubility in water.

In some embodiments, the polymerizable monomer dye is obtained by reacting a dye having a hydroxyl group or a carboxylic group with a polymerizable monomer having a carboxylic group, an acyl chloride group, an anhydride group, an ester group, or an alcoholic or phenolic group.

In some embodiments, the polymerizable monomer has a polymerizable function represented by a vinyl group. In a preferred embodiment, the polymerizable monomer is an acrylic or methacrylic acid, or a derivative thereof, such as acrylate or methacrylate esters.

In some embodiments, the reaction is conducted in a suitable solvent, preferably an aprotic solvent such as for example dichloromethane (DCM), acetone, acetonitrile, dimethyl formamide (DMF), dimethyl sulfoxide (DMSO), ethyl acetate, tetrahydrofuran, and the like.

In some embodiments, the reaction of the dye with the polymerizable monomer is an esterification reaction. In a preferred embodiment, the esterification reaction is conducted in the presence of a carbodiimmide, such as for example, dicyclohexylcarbodiimide, N,N' diisopropylcarbodiimide (DIC), or 1-ethyl-3-(3'-dimethylaminopropyl)carbodiimide (EDC) as a coupling reagent, and 4-dimethylaminopyridine as a catalyst.

The resultant polymerizable monomer dye can be isolated from the reaction mixture by methods known in the art. For example, the resultant polymerizable monomer dye can be isolated by washing the reaction mixture with water and/or a brine solution, separating the organic layer from the aqueous layer, and removing the solvent from the organic layer (e.g., by evaporation).

Starting from one or more different polymerizable monomer dyes, the polymeric dye can be prepared by synthetic methods described herein.

The copolymerization of one or more different polymerizable monomer dyes with polymerizable monomers can be realized by free-radical polymerization in a solvent chosen from acetonitrile or a mixture of methyl ethyl ketone and ethanol, and in the presence of a suitable initiator.

When using a mixture of methyl ethyl ketone (MEK) and ethanol (EtOH), the weight ratio MEK/EtOH is preferably ranging from 30/70 to 70/30, more preferably from 40/60 to 60/40, and still more preferably ranging from 45/55 to 55/45. Advantageously, the weight ratio MEK/EtOH is about 50/50.

In some embodiments, the reaction may be started by thermal decomposition of an initiator (e.g., an organic peroxide (e.g., dicumyl peroxide) or an azo compound), photolysis (e.g., with metal iodides, metal alkyls or azo compounds (e.g., azoisobutylnitrile (AIBN) or 2,2'-azobis[2-methylbutyronitrile] (AMBN)), a peroxide initiator (e.g., benzoyl peroxide), an initiator composition enabling a redox reaction (e.g., reduction of hydrogen peroxide or an alkyl hydrogen peroxide by means of iron ions or other reductants such as, e.g., Cr²⁺, V²⁺, Ti³⁺, Co²⁺ or Cu⁺), persulfate activation, ionizing radiation (e.g., by means of α-, β-, γ- or x-rays), electrochemical activation, plasma activation, or sonication (e.g., at around 16 kHz).

The resultant polymeric dye can be recovered from the reaction mixture by methods known in the art. For example, the resultant polymeric dye can be recovered by evaporation of the reaction solvent, i.e., by evaporation of acetonitrile or mixture of methyl ethyl ketone and ethanol or by precipitation with a suitable solvent.

According to the method of the present invention, the raw polymeric dye is purified by precipitation from the reaction mixture with di-isopropyl ether or methyl tert-butyl ether or dimethyl carbonate or ethyl acetate or water. The purification step can be repeated once or twice, after that the purified polymeric dye can be separated from di-isopropyl ether or methyl tert-butyl ether or dimethyl carbonate or ethyl acetate or water by methods known in the art such as by filtration, decantation or centrifugation.

In general, the reaction temperature for steps (1), (2) and (3) can be adjusted as necessary. In some embodiments, both steps (1) and (3) can be performed at room temperature. In some embodiments, step (1) is conducted at room temperature, and step (3) is conducted at 0°C. Step 2 is preferably conducted at a temperature ranging from 60°C to 85°C.

In general, the reaction time for steps (1) and (2) can be adjusted as necessary. The progress of steps (1) can (2) can be monitored by UV-Vis spectroscopy, NMR spectroscopy, or thin layer chromatography (TLC) by using methods known in the art.

The weight ratio between the amount of solvent employed during the synthesis and the amount of solvent employed during the purification step is preferably ranging from 1/5 to 1/30, more preferably from 1/10 to 1/25, and still more preferably from 1/15 to 1/20.

### Polymeric Dye

In an embodiment, the polymeric dye according to the present invention is a copolymer comprising at least one polymerizable monomer dye (I) to (III) and (V), as described above, copolymerized with a polymerizable monomer having formula (IV), as described above.

In an embodiment of the present invention, M1 to M5, equal or different each other, are selected from the group consisting of acrylic acid monomer, methacrylic acid monomer, acrylate monomer, methacrylate monomer, acrylamide monomer, methacrylamide monomer, vinyl alcohol monomer, vinyl amine monomer, and the like.

In an embodiment of the present invention, any one of C1-C4 can be a blue chromophore unit derived from a commercial dye selected from the group consisting of:
Acid Blue 1, 3, 7, 9, 15, 23, 25, 27, 35, 40, 41, 43, 45, 47, 49, 52, 57, 58, 61:1, 62, 62:1, 63, 64, 65, 68, 69, 72, 74, 78, 78:1, 79, 80, 81, 81:1, 83, 90, 92, 96, 103, 104, 111, 112, 113, 114, 120, 124, 127, 127:1, 128, 129, 129:1, 138, 138:1, 140, 142, 145, 150, 156, 158, 171, 175, 182, 185, 193, 199, 201, 203, 204, 205, 207, 209, 215, 220, 221, 224, 225, 229, 230, 239, 249, 258, 260, 264, 277, 277:1, 278, 279, 280, 284, 290, 296, 298, 300, 317, 324, 333, 335, 338, 342, 344, 350;
Basic Blue 1, 3, 5, 7, 9, 24, 25, 26, 28, 29;
Direct Blue 1, 15, 71, 76, 77, 78, 80, 86, 87, 90, 98,106, 108, 160, 168, 189, 192, 193, 199, 200, 201, 202, 203, 218, 225, 229, 237, 244, 248, 251, 270, 273, 274, 290, 291;
Disperse Blue 3, 7, 9, 14, 16, 19, 20, 26, 27, 35, 43, 44, 54, 55, 56, 58, 60, 62, 64, 71, 72, 73, 75, 77, 79, 79:1, 79:2, 81, 82, 83, 87, 91, 93, 94, 95, 96, 102, 106, 108, 112, 113, 115, 118, 120, 122, 125, 128, 130, 139, 141, 142, 143, 146, 148, 149, 153, 154, 158, 165, 167, 171, 173, 174, 176, 181, 183, 185, 186, 187, 189, 197, 198, 200, 201, 205, 207, 211, 214, 224, 225, 257, 259, 267, 268, 270, 281, 284, 285, 287, 288, 291, 291:1, 293, 295, 297, 301, 315, 330, 333, 373;
Food Blue 1, 2;
Reactive Blue 2, 3, 4, 5, 7, 13, 14, 15, 19, 21, 25, 27, 28, 29, 38, 39, 41, 49, 50, 52, 63, 69, 71, 72, 77, 79, 89, 104, 109, 112, 113, 114, 116, 119, 120, 122, 137, 140, 143, 147, 160, 161, 162, 163, 168, 171, 176, 182, 184, 191, 194, 195, 198, 203, 204, 207, 209, 211, 214, 220, 221, 222, 231, 235, 236;
Solvent Blue 4, 5, 6, 35, 38, 48, 59, 67, 70, 104, and 136.

In an embodiment of the present invention, any one of C1-C4 can be a red chromophore unit derived from a commercial dye selected from the group consisting of:
Acid Red 1, 6, 8, 9, 13, 18, 27, 35, 37, 52, 54, 57, 73, 82, 88, 97, 97:1, 106, 111, 114, 118, 119, 127, 131, 138, 143, 143:1, 145, 151, 183, 195, 198, 211, 215, 217, 225, 226, 249, 251, 254, 256, 257, 260, 261, 265, 266, 274, 276, 277, 289, 296, 299, 315, 318, 336, 337, 357, 359, 361, 362, 364, 366, 399, 407, 415, 447;
Basic Red 1, 2, 9, 12, 13, 37;
Direct Red 2, 4, 9, 23, 24, 31, 54, 62, 69, 79, 80, 81, 83, 84, 89, 95, 212, 224, 225, 226, 227, 239, 242, 243, 254;
Disperse Red 1, 4, 5, 7, 11, 12, 13, 15, 17, 27, 43, 44, 50, 52, 53, 54, 55, 56, 58, 59, 60, 65, 72, 73, 74, 75, 76, 78, 81, 82, 86, 88, 90, 91, 92, 93, 96, 103, 105, 106, 107, 108, 110, 111, 113, 117, 118, 121, 122, 126, 127, 128, 131, 132, 134, 135, 137, 143, 145, 146, 151, 152, 153, 154, 157, 159, 164, 167, 169, 177, 179, 181, 183, 184, 185, 188, 189, 190, 191, 192, 200, 201, 202, 203, 205, 206, 207, 210, 221, 224, 225, 227, 229, 239, 240, 257, 258, 277, 278, 279, 281, 288, 298, 302, 303, 310, 311, 312, 320, 324, 328, 337, 343;
Food Red 2, 3, 7, 9, 14, 52, 87, 92, 94, 102, 104, 105, 106;
Reactive Red 2, 3, 5, 8, 11, 21, 22, 23, 24, 28, 29, 31, 33, 35, 43, 45, 49, 55, 56, 58, 65, 66, 78, 83, 84, 106, 111, 312, 113, 114, 116, 120, 123, 124, 128, 130, 136, 141, 147, 158, 159, 171, 174, 180,183, 184, 187, 190, 193, 194, 195, 198, 218, 220, 222, 223, 228, 235;
Solvent Red 1, 23, 29, 49, 119, 122, 125, 127, 130, 132, 135, 149, 160, 164, 168, 169, 172 and 233.

In an embodiment of the present invention, any one of C1-C4 can be a green chromophore unit derived from a commercial dye selected from the group consisting of:
Acid Green 1, 3, 5, 9, 12, 16, 19, 20, 25, 27, 28, 40, 43, 50, 56, 73, 81, 84, 104, 108, 109;
Basic Green 1, 4, 5;
Direct Green 26, 28, 59, 80, 85;
Disperse Green 9;
Food Green 2, 3;
Reactive Green 5, 7, 8, 12, 15, 19, 21;
Solvent Green 1, 3, 7, and 11.

In an embodiment of the present invention, any one of C1-C4 can be a chromophore unit derived from a commercial dye selected from the group consisting of:
Acid Yellow 1, 3, 11, 17, 18, 19, 23, 25, 36, 38, 40, 40:1, 42, 44, 49, 59, 59:1, 61, 65, 72, 73, 79, 99, 104, 110, 159, 169, 176, 184, 193, 200, 204, 207, 215, 219, 219:1, 220, 230, 232, 235, 241, 242, 246;
Basic Yellow 1, 2, 11, 12, 14, 21, 28, 32, 36, 57, 87;
Direct Yellow 4, 7, 8, 9, 10, 11, 12, 22, 27, 28, 39, 44, 50, 58, 59, 62, 79, 86, 87, 98, 105, 106, 130, 132, 137, 142, 147, 153;
Disperse Yellow 3, 4, 5, 7, 9, 13, 23, 24, 30, 33, 34, 42, 44, 49, 50, 51, 54, 56, 58, 60, 63, 64, 66, 68, 71, 74, 76, 79, 82, 83, 85, 86, 88, 90, 91, 93, 98, 99, 100, 104, 108, 114, 116, 118, 119, 122, 124, 126, 135, 140, 141, 149, 160, 162, 163, 164, 165, 179, 180, 182, 183, 184, 186, 192, 198, 199, 202, 204, 210, 211, 215, 216, 218, 224, 227, 231, 232;
Food Yellow 3, 4, 5;
Reactive Yellow 2, 3, 7, 15, 17, 18, 22, 23, 24, 25, 27, 37, 39, 42, 57, 69, 76, 81, 84, 85, 86, 87, 92, 95, 102, 105, 111, 125, 135, 136, 137, 142, 143, 145, 151, 160, 161, 165, 167, 168, 175, 176;
Solvent Yellow 2, 3, 7, 10, 13, 14, 19, 25, 28, 33, 88, 89, 114, 146, 163;
Acid Orange 3, 6, 7, 8, 10, 12, 19, 20, 24, 51, 56, 63, 67, 74, 80, 86, 87, 88, 89, 94, 95, 107, 108, 116, 122, 127, 140, 142, 144, 149, 152, 156, 162, 166, 168;
Basic Orange 2, 14, 15, 21, 22, 31, 69;
Direct Orange 6, 26, 27, 34, 39, 40, 46, 102, 105, 107, 118;
Disperse Orange 1, 3, 5, 7, 11, 13, 17, 20, 21, 25, 29, 30, 31, 32, 33, 37, 38, 42, 43, 44, 45, 46, 47, 48, 49, 50, 53, 54, 55, 56, 57, 58, 59, 61, 66, 71, 73, 76, 78, 80, 89, 90, 91, 93, 96, 97, 119, 127, 130, 139, 142;
Reactive Orange 1, 4, 5, 7, 11, 2, 13, 15, 16, 20, 30, 35, 56, 64, 67, 69, 70, 72, 74, 82, 84, 86, 87, 91, 92, 93, 95, 107;
Solvent Orange 1, 2, 3, 7, 11, 15, 20, 25, 54, 60, 62, 63, 86, 99, 105;
Acid Violet 7, 9, 17, 19, 21, 42, 43, 47, 48, 49, 54, 66, 78, 90, 97, 102, 109, 126;
Basic Violet 1, 2, 3, 4, 7, 10, 14;
Direct Violet 9, 35, 51, 66, 94, 95;
Disperse Violet 1, 4, 8, 23, 26, 27, 28, 31, 33, 35, 36, 38, 40, 43, 46, 48, 50, 51, 52, 56, 57, 59, 61, 63, 69, 77;
Food Violet 2;
Reactive Violet 1, 2, 4, 5, 6, 8, 9, 22, 23, 33, 36, 38;
Solvent Violet 8, 9, 11, 13, 14, and 38.

Amongst the commercial dyes listed above, the preferred commercial dyes are those including at least one reactive function, such as a hydroxyl group, an amine group, or a carboxyl group, able to react with a reactive function of a polymerizable monomer. However, commercial dyes not having any reactive function can be used for the scope of the present invention by derivatization to include a reactive function.

In some embodiments, the polymeric dye according to the present invention can be a block copolymer, a random copolymer, or a graft copolymer. In a preferred embodiment, the polymeric dye according to the present invention is a random copolymer.

In some embodiments, the polymeric dye according to the present invention can have a weight average molecular weight of at least about 1,000 Da (e.g., at least about 2,000 Da, at least about 5,000 Da, at least about 7,500 Da, at least about 10,000 Da, at least about 12,500 Da, at least about 15,000 Da, at least about 17,500 Da, or at least about 20,000 Da) to at most about 150,000 Da (e.g., at most about 140,000 Da, at most about 130,000 Da, or at most about 120,000 Da, at most about 115,000 Da, at most about 110,000 Da, at most about 105,000 Da, at most about 100,000 Da, at most about 95,000 Da, or at most about 90,000 Da).

In some embodiments, the polymeric dye according to the present invention can comprise an amount of any one of the monomer repeating units having the formulas (I) to (V) of from at least about 5% (e.g., at least about 10%, at least about 15%, at least about 20%, at least about 25%, at least about 30%, at least about 35%, at least about 40%, at least about 45%, or at least about 50%) by weight to at most about 80% (e.g., at most about 75%, at most about 70%, at most about 65%, at most about 60%, at most about 55%, or at most about 50%) by weight with respect to the weight average molecular weight of the polymeric dye.

In an embodiment, the polymeric dye according to the present invention comprises an amount of any one of the monomer repeating units having the formulas (I), (II) and (IV) of from at least about 5% (e.g., at least about 10%, at least about 15%, at least about 20%, at least about 25%, at least about 30%, at least about 35%, at least about 40%, at least about 45%, or at least about 50%) by weight to at most about 80% (e.g., at most about 75%, at most about 70%, at most about 65%, at most about 60%, at most about 55%, or at most about 50%) by weight with respect to the weight average molecular weight of the polymeric dye.

In some embodiments, the polymeric dye according to the present invention comprises a total amount of monomer repeating units having the formulas (I) and (II) of from at least about 10% (e.g., at least about 15%, at least about 20%, at least about 25%, at least about 30%, at least about 35%, at least about 40%, at least about 45%, or at least about 50%) by weight to at most about 90% (e.g., at most about 85%, at most about 80%, at most about 75%, at most about 70%, at most about 65%, at most about 60%, at most about 55%, or at most about 50%) by weight with respect to the weight average molecular weight polymeric dye, the remaining amount being represented by monomer repeating units having the formula (IV), and optionally by monomer repeating units having the formulas (III) and (V).

In general, the polymeric dye according to the present invention can have a relatively high solubility in an organic solvent at 25°C. The term "high solubility" means the capability of the polymer to be dissolved in an organic solvent to form a homogenous solution (no suspension, no precipitate).

In some embodiments, the polymeric dye according to the present invention can have a solubility ranging from at least about 1% (e.g., at least about 2%, at least about 5%, at least about 10%, at least about 15%, at least about 20%, at least about 25%, at least about 30%, at least about 35%, at least about 40%, at least about 45%, or at least about 50%) by weight to at most about 90% (e.g., at most about 85%, at most about 80%, at most about 75%, at most about 70%, at most about 65%, at most about 60%, at most about 55%, or at most about 50%) by weight in an organic solvent at 25°C. As used herein, the solubility mentioned herein refers to the weight percentage of a solute (e.g., a polymeric dye) based on the total weight of a solution (e.g., a solution containing the solute and an organic solvent) at 25°C.

In some embodiments, the organic solvent in which the polymeric dye can be dissolved can include a ketone, an ester, an acetal, an ether, a carbonate, an ester, or a combination thereof. Examples of suitable organic solvent include methyl ethyl ketone, methyl isobutyl ketone, methyl isopropyl ketone, diethyl ketone, cyclopentanone, acetone, methyl acetate, ethyl acetate, methanol, ethanol, propanol, isopropanol, dimethyl carbonate, propylene carbonate, ethylene glycol, propylene glycol, propylene glycol monomethyl ether, and tripropylene glycol monomethyl ether. In some embodiments, the organic solvent can include a single solvent or a combination of two or more (e.g., three or four) solvents.

In some embodiments, the polymeric dye is substantially insoluble (e.g., having a solubility less than 0.5 wt%, preferably less than 0.3 wt%, more preferably less than 0.1 wt%) in water at 25°C.

In an embodiment, the polymeric dye of the present invention is soluble in organic solvent, preferably having a solubility in an organic solvent at 25°C of at least 1 wt%, and insoluble in water, preferably having a solubility in water at 25°C of less than 0.1 wt%.

### Ink Composition

In general, the polymeric dye according to the present invention can be formulated into an ink composition (e.g., an inkjet ink composition). In some embodiments, the ink composition can be a uniform solution, in which all solutes (including the polymeric dye according to the present invention) are dissolved. In some embodiments, the ink composition can be a dispersion or an emulsion. In some further embodiments, the ink composition can be a solid composition.

In some embodiments, the polymeric dye according to the present invention can range from at least about 1% (e.g., at least about 2%, at least about 5%, at least about 10%, at least about 15%, at least about 20%, at least about 25%, at least about 30%, at least about 35%, at least about 40%, at least about 45%, or at least about 50%) by weight to at most about 70% (e.g., at most about 65%, at most about 60%, at most about 55%, at most about 50%, at most about 45%, at most about 40%, at most about 35%, or at most about 30%) by weight of the ink composition.

Without wishing to be bound by theory, it is believed that the polymeric dye according to the present invention can form an ink composition without using any metal (e.g., any heavy metal) or any colorant. Further, without wishing to be bound by theory, it is believed that an ink composition containing the polymeric dye according to the present invention can have excellent light fastness, color strength, and adhesion properties.

In some embodiments, the ink composition described herein can include an organic solvent in which the polymeric dye according to the present invention is dissolved. In some embodiments, the organic solvent that is suitable for the ink composition can include a ketone, an ester, an acetal, an ether, a carbonate, an ester, or a combination thereof. Examples of suitable organic solvent include methyl ethyl ketone, methyl isobutyl ketone, methyl isopropyl ketone, diethyl ketone, cyclopentanone, acetone, methyl acetate, ethyl acetate, methanol, ethanol, propanol, isopropanol, dimethyl carbonate, propylene carbonate, ethylene glycol, propylene glycol, propylene glycol monomethyl ether, and tripropylene glycol monomethyl ether. In some embodiments, the organic solvent can include one solvent or a combination of two or more (e.g., three or four) solvents.

In some embodiments, the organic solvent can range from at least about 30% (e.g., at least about 35%, at least about 40%, at least about 45%, at least about 50%, at least about 55%, at least about 60%, at least about 65%, at least about 70%, at least about 75%, or at least about 80%) by weight to at most about 99% (e.g., at most about 97%, at most about 95%, at most about 90%, at most about 85%, at most about 80%, at most about 75%, at most about 70%, at most about 65%, or at most about 60%) by weight of the ink composition.

In some embodiments, the ink composition described herein can include a fusible carrier in which the polymeric dye according to the present invention is dispersed. In some embodiments, the fusible carrier that is suitable for the ink composition can include a wax, a resin and/or a long chain fatty acid, ester or alcohol. Examples of suitable resins include without limitation copolyester resins, polyamide resins, rosin resins, polyesteramide resins, epoxy resins, polyvinylalcohol resins, cellulose esters, cellulose ethers and polyvinyl pyridine resins. These resins may be used alone or in combination. Examples of suitable waxes include without limitation polyalkylene waxes, such as polyethylene waxes or polypropylene waxes, Fischer-Tropsch waxes, lineary primary alcohols, such as Unilin^{™} alcohol waxes (available from Baker Hughes), microcrystalline waxes, fatty acids, carnauba wax, candelilla wax, stearamides, paraffin wax and montan wax and ethoxylated long chain alcohols, such as Unithox^{™} (available from Baker Hughes). The waxes may be used alone or in combination. Examples of suitable long chain fatty acids, esters or alcohols include without limitation dialkyl ester of sebacic acid, higher aliphatic alcohol, stearic acid, lauric acid, and behenic acid. Moreover, a combination of waxes, resins and/or long chain fatty acids, esters or alcohols may be used.

In some embodiments, the fusible carrier can range from at least about 30% (e.g., at least about 35%, at least about 40%, at least about 45%, at least about 50%, at least about 55%, at least about 60%, at least about 65%, at least about 70%, at least about 75%, or at least about 80%) by weight to at most about 99% (e.g., at most about 97%, at most about 95%, at most about 90%, at most about 85%, at most about 80%, at most about 75%, at most about 70%, at most about 65%, or at most about 60%) by weight of the ink composition.

In some embodiments, the ink composition described herein can include only two components (i.e., the polymeric dye according to the present invention and an organic solvent or a fusible carrier). In some embodiments, the ink composition can optionally include one or more (e.g., two, three, or four) additives or additional components.

In some embodiments, the ink composition described herein can optionally include at least one conductivity salt. Examples of suitable conductivity salts include alkali metal salts, alkaline earth salts and single or quaternary ammonium salts in the form of halides (chlorides, bromides, iodides and fluorides), perchlorates, nitrates, thiocyanates, formiates, acetates, sulphates, propionates, and the like.

In some embodiments, the ink composition described herein can optionally include at least one rheology agent. Examples of suitable rheology agents include nitrocellulose, cellulose acetate butyrate, cellulose acetate, shellac, a rosin ester, a polyurethane, an acrylic, or a conductive polymer (e.g., polyaniline). In some embodiments, the rheology agent can range from at least about 1% (e.g., at least about 2%, at least about 4%, at least about 5%, at least about 6%, at least about 8%, at least about 10%, or at least about 15%) by weight to at most about 30% (e.g., at most about 25%, at most about 20%, at most about 15%, at most about 10%, or at most about 5%) by weight of the ink composition. Without wishing to be bound by theory, it is believed that adding a rheology agent in the ink composition described herein can increase the viscosity of the ink composition, provide structure for flow and drop formation, promote adhesion, slow or prevent separation of other ink components, and/or modify charge of the ink composition.

In some embodiments, the ink composition described herein can optionally include at least one additional colorant, such as a dye or a pigment. The dye or pigment can be either an organic or inorganic material. In some embodiments, the ink composition can be substantially free of a colorant other than the polymeric dye according to the present invention.

In some embodiments, the ink composition described herein can optionally include one or more tackifiers. In general, a tackifier can improve adhesion between the ink composition and a substrate (e.g., a cardboard, a glass, a metal, or a film). Examples of tackifiers include glycerol esters, pentaerythritol esters, hydrocarbons, rosin, rosin esters, modified rosin esters (e.g., hydrogenated, acid, or phenolic-modified rosin esters), cumarone-indene polymers, cyclic ketone polymers, styrene allyl alcohol polymers, polystyrenes, polyvinyl toluene/methylstyrene polymers, polyvinyl chloride, polyvinyl alcohol, ethylene/vinyl acetate, ethylene/acrylic acid, alkyl hydrocarbon polymers, aryl hydrocarbon polymers, alkyl aryl hydrocarbon polymers, terpene polymers, ethylene carbon monoxide copolymers, vinyl chloride/vinyl alcohol copolymers, polyvinyl butyral, polyketones, styrene/acrylic copolymers, polybutenes, polybutadienes, styreneisoprene-styrene, styrene-butadiene- styrene, polyvinyl pyrrolidone, polyvinyl pyridine, vinyl pyrrolidone/vinyl acetate, polyurethanes, polyesters, polyamides, cellulose esters, cellulose ethers, polyols, styrene-acrylates, polypropylene, chlorinated polypropylene, chlorinated paraffin, gilsonite and other asphaltic materials, cyclic hydrocarbon polymer, halogenated polymers, acrylics, epoxides, novolacs, and other synthetic and natural resins. In some embodiments, the ink composition contains at least about 1 wt% (e.g., at least about 5 wt%, at least about 10 wt%, or at least about 15 wt%) and/or at most about 25 wt% (e.g., at most about 20 wt%, at most about 15 wt%, at most about 10 wt%, or at most about 5 wt%) of the tackifier.

In some embodiments, the ink composition described herein can optionally include one or more resins (e.g., binder resins). The resin can provide the ink composition with a desired viscosity, thermal stability, flexibility, and adhesion properties. Examples of suitable resins include acacia (gum arabic); gum ghatti; guar gum; locust (carob) bean gum; karaya gum (sterculia gum); gum tragacanth; chicle; highly stabilized rosin ester; tall oil; manila copals; corn gluten; coumarone-indene resins; crown gum; damar gum; p, alpha-dimethylstyrene; gum elemi; ethylene oxide polymer and its adducts; ethylene oxide/propylene oxide copolymer and its adducts; galbanum resin; gellan gum; ghatti gum; gluten gum; guaiac gum; guarana gum; heptyl paraben; cellulose resins, including methyl and hydroxypropyl; hydroxypropyl methylcellulose resins; isobutyl ene-isoprene copolymer; mastic gum; oat gum; opopanax gum; polyacrylamide; modified polyacrylamide resin; polylimonene; polyisobutylene; polymaleic acid; polyoxyethylene derivatives; polypropylene glycol; polyvinyl acetate; polyvinyl alcohol; polyvinyl polypyrrolidone; polyvinyl pyrrolidone; rosin, adduct with fumaric acid, pentaerythritol ester; rosin, gum, glycerol ester; rosin, gum or wood, pentaerythritol ester; rosin, gum or wood, partially hydrogenated, glycerol ester; rosin, gum or wood, partially hydrogenated, pentaerythritol ester; rosin, methyl ester, partially hydrogenated; rosin, partially dimerized, glycerol ester; rosin, partially hydrogenated; rosin and rosin derivatives; rosin, polymerized, glycerol ester; rosin, tall oil, glycerol ester; rosin, wood; rosin, wood, glycerol ester; purified shellac; styrene; styrene terpolymers; styrene copolymers; sucrose acetate isobutyrate; terpene resins, natural and synthetic; turpentine gum; vinylacetate; vinyl chloride-vinylidene chloride copolymer; xanthan gum; and zein. In some embodiments, the ink composition includes enough resin to achieve the desired viscosity, stability, flexibility, and adhesion. In some embodiments, the ink composition contains at least about 1 wt% (e.g., at least about 5 wt%, at least about 10 wt%, or at least about 15 wt%) and/or at most about 25 wt% (e.g., at most about 20 wt%, at most about 15 wt%, at most about 10 wt%, or at most about 5 wt%) of the resin. In some embodiments, the ink composition is substantially free of any resin other than the polymeric dye according to the present invention.

In some embodiments, the ink composition described herein can optionally include one or more plasticizers. In general, a plasticizer can reduce the viscosity of the ink composition. Examples of plasticizers include aromatic sulfonamides, phthalates, acetates, adipates, amides, azelates, epoxides, glutarates, laurates, oleates, sebacates, stearates, sulfonates, tallates, phosphates, benzoin ethers, and trimellitates. In some embodiments, the ink composition contains at least about 1 wt% (e.g., at least about 2 wt%, at least about 4 wt%, at least about 6 wt%, or at least about 8 wt%) and/or at most about 10 wt% (e.g., at most about 9 wt%, at most about 7 wt%, at most about 5 wt%, or at most about 3 wt%) of the plasticizer.

In some embodiments, the ink composition described herein can optionally include one or more antioxidants. In general, an antioxidant can inhibit oxidation (e.g., thermally induced oxidation) of the ink composition (e.g., when the ink composition is in a hot molten state during jetting). Examples of antioxidants include butylated hydroxyanisole (BHA); butylated hydoxytoluene (BHT); propyl gallate; tert-butyl hydroquinone (TBHQ); ethyl enedi ami netetraacetic acid (EDTA); methyl paraben; and propyl paraben. Commercial examples of the antioxidants include Irganox 1010 (i.e., a hindered phenol) and Irgafos 168 (i.e., tris(2,4-di-tert-butylphenyl)phosphite) available from BASF Corporation (Florham Park, NJ). In some embodiments, the ink composition contains at least about 0.1 wt% (e.g., at least about 0.5 wt%, at least about 1 wt%, or at least about 3 wt%) and at most about 5 wt% (e.g., at most about 4 wt%, at most about 3 wt%, at most about 2 wt%, or at most about 1 wt%) of the antioxidant.

In some embodiments, the ink composition described herein can optionally include one or more dispersants. In general, a dispersant can assist in stabilizing an insoluble component (e.g., a colorant) in the ink composition. For example, the dispersant can prevent agglomeration of a colorant (e.g., a pigment) in the ink composition. Examples of dispersants include Solsperse 13,650, 13,940, 17,000, J910; Byk 108; Tego Dispers 700; UNIQEMA 5543; and EFKA 5244, 5207, 6750; which are all commercially available from Lubrizol; Byk; Evonik; Croda; and BASF, respectively. In some embodiments, the ink composition contains at least about 1 wt% (e.g., at least about 2 wt%, at least about 4 wt%, at least about 6 wt%, or at least about 8 wt%) and at most about 10 wt% (e.g., at most about 9 wt%, at most about 7 wt%, at most about 5 wt%, or at most about 3 wt%) of the dispersant.

In general, the ink composition described herein can have any suitable apparent viscosity. In some embodiments, the ink composition can have an apparent viscosity ranging from at least about 1 centiPoise (cP) (e.g., at least about 5 cP, at least about 10 cP, at least about 15 cP, or at least about 20 cP) to at most about 25 cP (e.g., at most about 20 cP, at most about 15 cP, or at most about 10 cP) measured at 20°C and at 73 s⁻¹.

In some embodiments, the ink composition described herein can optionally include one or more conductive agents. In some embodiments, the conductive agent can be a salt (e.g., an organic salt or an inorganic salt). For example, the salt can be a quaternary phosphonium salt (e.g., a tetraalkylphosphonium or tetraarylphosphonium salt), a quaternary ammonium salt (e.g., a tetraalkylammonium or tetraarylammonium salt), an imidazolium salt, or an alkali salt (e.g., a Li, Na, K, or Cs salt).

In general, the ink composition described herein can have any suitable conductivity. In some embodiments, the ink composition can have a conductivity ranging from at least about 0 µS/cm (e.g., at least about 10 µS/cm, at least about 50 µS/cm, at least about 100 µS/cm, at least about 200 µS/cm, at least about 300 µS/cm, at least about 400 µS/cm at least about 500 µS/cm, or at least about 1000 µS/cm) to at most about 8000 µS/cm (e.g., at most about 7000 µS/cm, at most about 6000 µS/cm, at most about 5000 µS/cm, at most about 4000 µS/cm, at most about 3000 µS/cm, at most about 2000 µS/cm, or at most about 1000 µS/cm). For example, when the ink composition is designed for use in a continuous inkjet printing process, the ink composition can have a suitable conductivity (e.g., 100-8000 µS/cm) to enable the ink composition to be printed in this process. As another example, when the ink composition is designed for use in a thermal inkjet printing process, the ink composition can have zero conductivity since conductivity is not required in this printing process.

In some embodiments, the ink composition is substantially free of a certain material. For example, the ink composition can be substantially free of a wax (e.g., a polyethylene wax), a colorant (e.g., a non-polymeric colorant) other than the polymeric dye according to the present invention, a resin (e.g., a non-polymeric resin) other than the polymeric dye according to the present invention, or a conductive agent (e.g., a salt).

In some embodiments, the ink composition can be a solution (in which all solutes (e.g., a polymeric dye according to the present invention are dissolved) or a dispersion (which contains dispersed particles).

### Printing Process and Product

In general, the ink composition described herein can be used in any suitable printing process, including a continuous inkjet (CIJ) printing process, a drop-on-demand printing process (e.g., thermal inkjet (TIJ) printing process or a piezo printing process), a hot-melt printing process, a valvejet printing process, a flexographic printing process, a lithographic printing process, a gravure printing process, a screen printing process, or a pad printing process, or an offset printing process. In some embodiments, the ink composition can be used in a printing process that includes ejecting the ink composition (either continuously or on demand) from a printhead in an inkjet printer onto a substrate to form an image.

In some embodiments, in a continuous inkjet printing process, a continuous stream of conductive ink droplets can be ejected from one or more nozzles of a printhead of an inkjet printer. The droplets are electrostatically deflected to address several vertical pixels as the substrate moves relative to the nozzles. CIJ inks generally have a suitable conductivity and allows the droplets to be deflected. The process of jetting ink droplets continuously and directing unneeded drops to the gutter allows the CIJ systems to utilize fast evaporating solvents (e.g., those having a relative evaporation rate (RER) greater than 1 as determined by the ASTM method D3359 and relative to n-butyl acetate) without concern for decap (i.e., the ability to remain in the fluid condition in a printhead nozzle opening on exposure to air) and nozzle clogging, as the nozzles are effectively never idle during operation.

In some embodiments, in a continuous inkjet printing process, a continuous ink stream ejected from a printhead is deviated by at least one electrode to which a static or sinusoidal high voltage is applied. Most of the ink stream is not printed and is directed to an ink recovery gutter. During printing, segments of the ink stream are sampled asynchronously, deviated differently depending on their length (the length providing a means of varying the distribution of embedded electrical charge per unit length) and directed towards the substrate. These segments, which can be transformed into spherical drops under the effect of the surface tension, are separated from the jet before they are deflected such that their trajectory is different from the ink stream.

In some embodiments, in a drop-on-demand printing process, inks can be jetted by either thermal inkjet cartridges or piezo drop-on-demand printheads. To print inks, an ink is loaded into a reservoir where it is either pumped or fed by gravity to a jetting chamber of a cartridge or printhead. In the case of the thermal inkjet cartridge, a liquid ink is ejected from a printhead by being rapidly heated, causing a rapid phase change from liquid to gas, thus causing a rapid volume expansion and subsequently causing a droplet to eject from an orifice. In the case of a piezo-based device, a liquid ink is ejected from a printhead by activation of a piezo transformer (PZT), which causes a pressure wave to be exerted upon the ink and an ink droplet can be ejected from an orifice. Both devices are referred to as drop-on-demand since a droplet of ink is ejected only when a heater or PZT material is activated. Each cartridge or printhead contains an array of several orifices across its width. Activation of each orifice in such an array is performed methodically by the printer such that an image is formed drop-wise on a substrate, which is positioned a short distance from the orifice array. The printers are designed such that an orifice array and a substrate move relative to one another in order to form an image.

This disclosure also features a product that includes a substrate and a solid ink defining an image on the substrate, in which the solid ink includes the ink composition described herein. The substrate can be any suitable materials (e.g., porous or non-porous materials), such as films, coated and non-coated papers, plastics, glass, metals, and cardboards. In some embodiments, the substrate can be a package material, such as a cardboard (e.g., a corrugated cardboard) or a film (e.g., a shrink wrap). Examples of suitable substrates include flexible packaging films (e.g., polypropylene, polyethylene, polyethylene terephthalate, polystyrene, or poly(lactic acid) films), rigid plastic materials (e.g., polypropylene, polyethylene, polyethylene terephthalate, polystyrene, poly(lactic acid), polyvinylchloride materials), corrugated cardboard (e.g., bleached, unbleached, and coated cardboard), boxboard (e.g., glossy coated, matte coated, and uncoated boxboards), bottle materials (e.g., glass, polyethylene terephthalate, polyethylene, polypropylene, and poly(lactic acid) materials). The contents of all publications cited herein (e.g., patents, patent application publications, and articles) are hereby incorporated by reference in their entirety.

The present invention will be further illustrated below by means of several preparatory examples, which are provided for indicative purposes only and without any limitation of the present invention.

### EXPERIMENTAL PART

### Example 1

### Synthesis of Disperse Red 1 Methacryloyloxyethylsuccinate

The title product is obtained by reacting the Disperse Red 1 with methacryloyloxyethylsuccinic acid according to the following reaction. 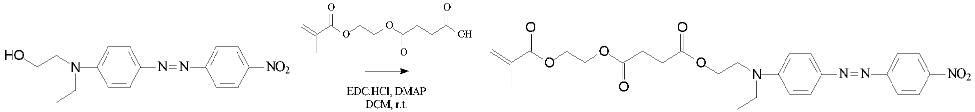
EDC.HCL : 1-ethyl-3-(3'-dimethylaminopropyl)carbodiimide hydrochloride
DMAP : Dimethylaminopyridine
DCM : Dichloromethane

In a round bottom flask, Disperse red 1 (10.0 g, 31.9 mmol, 1 eq) and 2-(methacryloyloxy)ethyl succinate (8.1g, 35.0 mmol, 1.1 eq) were dissolved in 310 mL of dichloromethane. The mixture was cooled down to 0°C with an ice bath, then EDC.HCl (7.4 g, 38.5 mmol, 1.2 eq) and DMAP (0.78 g, 6.4 mmol, 0.2 eq) were successively added in small portions under nitrogen flow. At the end of the addition, the mixture was left under stirring at room temperature for 1 hour. At the end of the reaction, 100 mL of HCl 0.5 M were added, and the mixture was transferred in a separatory funnel. After decantation, the organic phase is collected and dried over anhydrous sodium sulfate, filtered on frit Por4, and concentrated under reduced pressure. When dichloromethane was completely removed, the polymerizable red monomer appears to be a red powder. The chemical structure of this monomer was confirmed by ¹H NMR (in Chloroform-d).

**¹H NMR (300 MHz, Chloroform-d)** δ (ppm) 8.34 - 8.14 (m, 2H), 7.92 - 7.68 (m, 4H), 6.81 - 6.63 (m, 2H), 6.05 (p, *J* = 1.1 Hz, 1H), 5.51 (p, *J* = 1.6 Hz, 1H), 4.26 (d, *J* = 8.1 Hz, 6H), 3.73 - 3.28 (m, 4H), 2.57 (h, *J* = 1.6 Hz, 4H), 1.87 (t, *J* = 1.2 Hz, 3H), 1.18 (t, *J* = 7.0 Hz, 3H).

### Example 2

### Synthesis of Blue Patent V Methacryloyloxyethylsuccinate

The title product is obtained by reacting the Blue Patent V with methacryloyloxyethylsuccinic acid according to the following reaction. 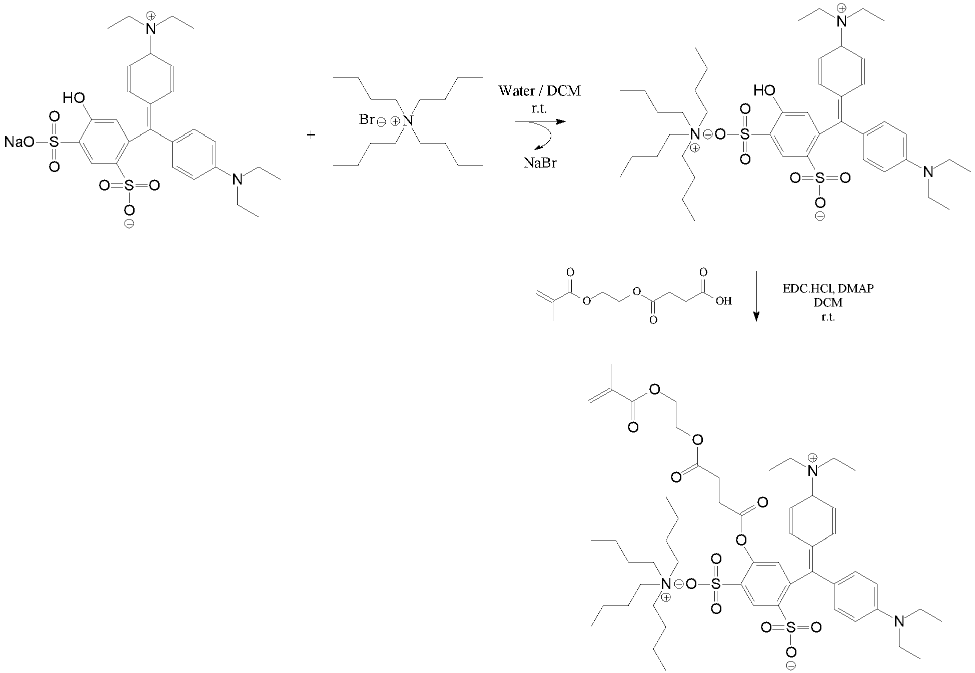
EDC.HCL : 1-ethyl-3-(3'-dimethylaminopropyl)carbodiimide hydrochloride
DMAP : Dimethylaminopyridine
DCM : Dichloromethane
NBu : tetrabutyl ammonium

The first step consists in the substitution of the sodium counter-ion with tetrabutyl ammonium to decrease the hydrophilic character of Patent Blue V. In a round bottom flask, Patent blue V sodium salt (20.0 g, 0.034 mol, 1 eq) and Tetra-n-butylammonium bromide (22.1 g, 0.069 mol, 2 eq) were solubilized in 400 mL of a mixture of dichloromethane/water 3/1 v/v. The biphasic mixture was vigorously stirred for 3 hours at room temperature, then 1L of dichloromethane and 400 mL of HCl 0.5M were added before transferring the solution in a separatory funnel. After the two phases have settled, the organic phase was recovered, dried over anhydrous sodium sulfate, filtered on frit Por4 and concentrated under reduced pressure. After the complete removal of dichloromethane, the intermediate product was obtained as a dark violet powder. Its chemical structure was confirmed by ¹H NMR (in Chloroform-d).

The second step consists in the reaction between the dye and the polymerizable monomer. In a round-bottom flask, the product of the step one (20.9 g, 16.9 mmol, 1 eq) and 2-(methacryloyloxy)ethyl succinate (4.28 g, 18.6 mmol, 1.1 eq) were dissolved in 150 mL of dichloromethane. The mixture was cooled down to 0°C with an ice bath, then EDC.HCI (3.9 g, 20.4 mmol,1.2 eq) and DMAP (0.41 g, 3.4 mmol, 0.2 eq) were successively added in small portions under nitrogen flow. At the end of the addition, the mixture was left under stirring at room temperature for 4 hours. At the end of the reaction, 200 mL of dichloromethane and 150 mL of HCI 0.5M were added, and the mixture was transferred in a separatory funnel. After decantation, the organic phase was dried over anhydrous sodium sulfate, filtered on frit Por4 and concentrated under reduced pressure. When dichloromethane was completely removed, the polymerizable blue monomer appears to be a dark blue powder. The chemical structure of this monomer was confirmed by ¹H NMR (in Chloroform-d).

**¹H NMR (300 MHz, Chloroform-*d*)** δ (ppm) 8.65 (s, 1H), 7.45 (dd, J = 9.1, 6.7 Hz, 4H), 6.80 - 6.57 (m, 5H), 6.14 - 5.96 (m, 1H), 5.50 (m, 1H), 4.24 (s, 4H), 3.52 (q, J = 7.1 Hz, 8H), 3.42 - 3.10 (m, 16H), 2.96 (t, J = 6.9 Hz, 2H), 2.75 (t, J = 6.9 Hz, 2H), 1.97 - 1.78 (m, 3H), 1.78 - 1.50 (m, 16H), 1.50 - 1.08 (m, 28H), 0.93 (t, J = 7.3 Hz, 24H).

### Example 3 - Comparison

### Synthesis of black polymeric dye

Starting from the synthesized monomeric dyes of examples 1 and 2, a black polymeric dye was obtained by free-radical polymerization according to the following scheme 1.

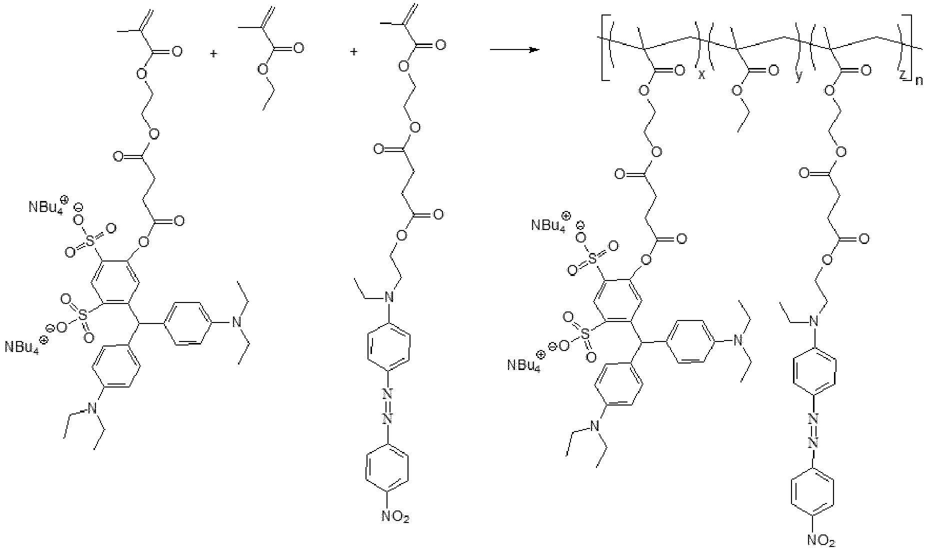

In a round-bottom flask, Blue Patent V Methacryloyloxyethylsuccinate (4.0 g, 1.77 mmol), Disperse Red 1 Methacryloyloxyethylsuccinate (1.37 g, 2.53 mmol), ethyl methacrylate (3.6 g, 31.5 mmol) and AIBN (0.12 g, 0.72 mmol) were dissolved in 40 mL of DMF. The mixture was deoxygenated under argon flux for 30 min at room temperature, then the polymerization was performed at 80°C overnight. When the polymerization was completed, DMF was removed by evaporation under vacuum. Next, the product was dissolved in dichloromethane and precipitated twice in a cold mixture of MeOH/Et₂O 3/7 then once in pentane. Before each precipitation, the product was redissolved in dichloromethane.

After drying in an oven at 40°C, the polymer was obtained as a black powder. The chemical structure of synthesized polymer was confirmed by ¹H NMR (in Chloroform-d), while the molecular weight was evaluated by GPC with DMF as eluent and PMMA as standard (Mw=60,000 Da).

The yield of black polymeric dye was about 48% w/w.

**¹H** NMR (300 MHz, Chloroform-d) δ (ppm) 8.70 (s, 1Hₓ), 8.34 (d, *J* = 8.6 Hz, 2H_{z}), 7.92 (t, *J* = 8.4 Hz, 4H_{z}), 7.51 (d, *J* = 9.1 Hz, 4Hₓ), 6.90 - 6.60 (m, 5Hₓ + 2H_{z}),4.54 - 3.83 (m, 4Hₓ + 2H_{y} + 6H_{z}), 3.71 (s, 2H_{z}),3.65 - 3.44 (m, 8Hₓ + 2H_{z}),3.34 (d, *J* = 8.6 Hz, 16Hₓ), 3.05 (s, 2Hₓ), 2.82 (s, 2Hₓ), 2.68 (s, 4H_{z}), 2.39 - 1.58 (m, 18Hₓ + 2H_{y} + 5H_{z)}, 1.56 - 1.15 (m, 28Hₓ + 3 H_{y} + 3H_{z}), 1.15 - 0.48 (m, 27Hₓ + 3H_{y} + 3H_{z}).

### Example 4 - Comparison

### Synthesis of black polymeric dye

Starting from the synthesized monomeric dyes of examples 1 and 2, a black polymeric dye was obtained by free-radical polymerization according to the scheme 1 under the following conditions.

In a round-bottom flask, Blue Patent V Methacryloyloxyethylsuccinate (128 g, 0.66 mol), Disperse Red 1 Methacryloyloxyethylsuccinate (51.1 g, 0.097 mol), ethyl methacrylate (135.1 g, 1.18 mol) and AIBN (4.4 g, 0.027 mol) were dissolved in 1250 g of DMF. The mixture was deoxygenated under argon flux for 30 min at room temperature, then the polymerization was performed at 80°C overnight. When the polymerization was completed, DMF was removed by evaporation under vacuum. Next, the product was dissolved in dichloromethane and precipitated twice in a cold mixture of MeOH/Et₂O (3/7, 2/8 v/v) then once in Et₂O. Before each precipitation, the product was redissolved in dichloromethane.

After drying in an oven at 60°C, the polymer was obtained as a black powder. The chemical structure of synthesized polymer was confirmed by ¹H NMR (in Chloroform-d) as for example 3, while the molecular weight was evaluated by GPC with DMF as eluent and PMMA as standard (Mw=63,400 Da).

The yield of black polymeric dye was about 67% w/w.

### Example 5 - Comparison

### Synthesis of black polymeric dye

Starting from the synthesized monomeric dyes of examples 1 and 2, a black polymeric dye was obtained by free-radical polymerization according to scheme 1 above under the following conditions.

In a round-bottom flask, Blue Patent V Methacryloyloxyethylsuccinate (1.7 g, 1.4 mmol), Disperse Red 1 Methacryloyloxyethylsuccinate (1.0 g, 1.3 mmol), ethyl methacrylate (2.0 g, 17 mmol) and AIBN (0.17 g, 1.0 mmol) were dissolved in 19 g of DMF. The mixture was deoxygenated under argon flux for 30 min at room temperature, then the polymerization was performed at 80°C. After 6 h, DMF was removed by evaporation under vacuum. Next, the product was dissolved in acetonitrile and precipitated in 400 mL of diethyl ether.

After drying in an oven at 60°C, the polymer was obtained as a black powder. The chemical structure of synthesized polymer was confirmed by ¹H NMR (in Chloroform-d) as for example 3, while the molecular weight was evaluated by GPC with DMF as eluent and PMMA as standard (Mw=46,600 Da).

The yield of black polymeric dye was about 80% w/w.

### Example 6 - Invention

### Synthesis of black polymeric dye

Starting from the synthesized monomeric dyes of examples 1 and 2, a black polymeric dye was obtained by free-radical polymerization according to scheme 1 above under the following conditions.

In a round-bottom flask, Blue Patent V Methacryloyloxyethylsuccinate (4.5 g, 3.7 mmol), Disperse Red 1 Methacryloyloxyethylsuccinate (2.6 g, 4.7 mmol), ethyl methacrylate (5.3 g, 46.0 mmol) and AMBN (0.54 g, 2.7 mmol) were dissolved in 20 g of acetonitrile. The mixture was deoxygenated under argon flux for 30 min at room temperature, then the polymerization was performed at 80°C. After 24h, the product was precipitated in di-isopropyl ether at room temperature (20°C). The amount of di-isopropyl ether was about 20 times the amount of the synthesis solvent acetonitrile (acetonitrile/di-isopropyl ether volume ratio equal to about 1/20).

After drying in an oven at 60°C, the polymer was obtained as a black powder. The chemical structure of synthesized polymer was confirmed by ¹H NMR (in Chloroform-d) as for example 3, while the molecular weight was evaluated by GPC with DMF as eluent and PMMA as standard (Mw=86,200 Da).

The yield of black polymeric dye was about 90% w/w.

### Example 7 - Invention

### Synthesis of black polymeric dye

Starting from the synthesized monomeric dyes of examples 1 and 2, a black polymeric dye was obtained by free-radical polymerization according to scheme 1 above under the following conditions.

In a round-bottom flask, Blue Patent V Methacryloyloxyethylsuccinate (55.0 g, 45 mmol), Disperse Red 1 Methacryloyloxyethylsuccinate (32.3 g, 57 mmol), ethyl methacrylate (64.6 g, 566 mmol) and AMBN (6.6 g, 33 mmol) were dissolved in 270 g of acetonitrile. The mixture was deoxygenated under argon flux for 30 min at room temperature, then the polymerization was performed at 80°C. After 8 h, the product was precipitated in di-isopropyl ether at 0°C. The amount of di-isopropyl ether was about 15 times the amount of the synthesis solvent acetonitrile (acetonitrile/di-isopropyl ether volume ratio equal to about 1/15).

After drying in an oven at 60°C, the polymer was obtained as a black powder. The chemical structure of synthesized polymer was confirmed by ¹H NMR (in Chloroform-d) as for example 3, while the molecular weight was evaluated by GPC with DMF as eluent and PMMA as standard (Mw=66,300 Da).

The yield of black polymeric dye was about 99% w/w.

### Example 8 - Invention

### Synthesis of black polymeric dye

In a round-bottom flask, Blue Patent V Methacryloyloxyethylsuccinate (55.0 g, 45 mmol), Disperse Red 1 Methacryloyloxyethylsuccinate (32.3 g, 57 mmol), ethyl methacrylate (64.6 g, 566 mmol) and AMBN (6.6 g, 33 mmol) were dissolved in 270 g of acetonitrile. The mixture was deoxygenated under argon flux for 30 min at room temperature, then the polymerization was performed at 80°C. After 8 h, the product was precipitated in methyl tert-butyl ether at 0°C. The amount of methyl tert-butyl ether was about 15 times the amount of the synthesis solvent acetonitrile (acetonitrile/ methyl tert-butyl ether volume ratio equal to about 1/15).

After drying in an oven at 60°C, the polymer was obtained as a black powder. The chemical structure of synthesized polymer was confirmed by ¹H NMR (in Chloroform-d) as for example 3, while the molecular weight was evaluated by GPC with DMF as eluent and PMMA as standard (Mw=68,700 Da).

The yield of black polymeric dye was about 92% w/w.

It is understood that, given the above description of the embodiments of the invention, various modifications may be made by one skilled in the art. Such modifications are intended to be encompassed by the claims below.

## Claims

1. A method for synthetizing a polymeric dye comprising the steps of:
(1) reacting a dye comprising a first reactive function with a polymerizable monomer comprising a second reactive function to get a polymerizable monomer dye having any one of the following formulas (I) to (III) and (V): 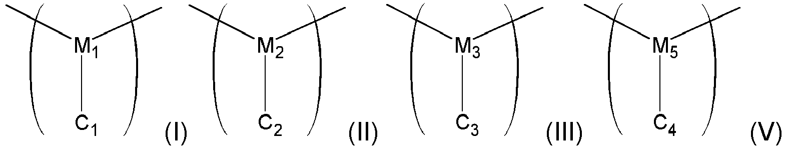 wherein M1, M2, M3, and M5, equal or different each other, are reactive monomers, and C1 to C4, different each other, are chromophore units,
(2) copolymerizing at least one polymerizable monomer dye (I) to (III) and (V) with a polymerizable monomer having the following formula (IV) 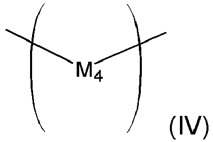 wherein M4 is a reactive monomer, and
(3) recovering the resulting polymeric dye,
wherein said copolymerizing step (2) is conducted in a solvent chosen from acetonitrile or a mixture of methyl ethyl ketone and ethanol, and said recovering step (3) comprises a purification step conducted with a solvent chosen from di-isopropyl ether, methyl tert-butyl ether, dimethyl carbonate, ethyl acetate, and water.

2. The method for synthetizing a polymeric dye according to claim 1, wherein said first reactive function is selected from the group consisting of a hydroxyl group, an amine group, or a carboxyl group.

3. The method for synthetizing a polymeric dye according to claim 1, wherein said second reactive function is selected from the group consisting of a carboxylic group, an acyl chloride, an anhydride group, an ester group, a hydroxyl group, or an amine group.

4. The method for synthetizing a polymeric dye according to claim 1, wherein M1 to M5, equal or different each other, are selected from the group consisting of acrylic acid monomer, methacrylic acid monomer, acrylate monomer, methacrylate monomer, acrylamide monomer, methacrylamide monomer, vinyl alcohol monomer, and vinyl amine monomer.

5. The method for synthetizing a polymeric dye according to claim 1, wherein any one of C1-C4 can be a blue chromophore unit derived from a commercial dye selected from the group consisting of:
Acid Blue 1, 3, 7, 9, 15, 23, 25, 27, 35, 40, 41, 43, 45, 47, 49, 52, 57, 58, 61:1, 62, 62:1, 63, 64, 65, 68, 69, 72, 74, 78, 78:1, 79, 80, 81, 81:1, 83, 90, 92, 96, 103, 104, 111, 112, 113, 114, 120, 124, 127, 127:1, 128, 129, 129:1, 138, 138:1, 140, 142, 145, 150, 156, 158, 171, 175, 182, 185, 193, 199, 201, 203, 204, 205, 207, 209, 215, 220, 221, 224, 225, 229, 230, 239, 249, 258, 260, 264, 277, 277:1, 278, 279, 280, 284, 290, 296, 298, 300, 317, 324, 333, 335, 338, 342, 344, 350;
Basic Blue 1, 3, 5, 7, 9, 24, 25, 26, 28, 29;
Direct Blue 1, 15, 71, 76, 77, 78, 80, 86, 87, 90, 98,106, 108, 160, 168, 189, 192, 193, 199, 200, 201, 202, 203, 218, 225, 229, 237, 244, 248, 251, 270, 273, 274, 290, 291;
Disperse Blue 3, 7, 9, 14, 16, 19, 20, 26, 27, 35, 43, 44, 54, 55, 56, 58, 60, 62, 64, 71, 72, 73, 75, 77, 79, 79:1, 79:2, 81, 82, 83, 87, 91, 93, 94, 95, 96, 102, 106, 108, 112, 113, 115, 118, 120, 122, 125, 128, 130, 139, 141, 142, 143, 146, 148, 149, 153, 154, 158, 165, 167, 171, 173, 174, 176, 181, 183, 185, 186, 187, 189, 197, 198, 200, 201, 205, 207, 211, 214, 224, 225, 257, 259, 267, 268, 270, 281, 284, 285, 287, 288, 291, 291:1, 293, 295, 297, 301, 315, 330, 333, 373;
Food Blue 1, 2;
Reactive Blue 2, 3, 4, 5, 7, 13, 14, 15, 19, 21, 25, 27, 28, 29, 38, 39, 41, 49, 50, 52, 63, 69, 71, 72, 77, 79, 89, 104, 109, 112, 113, 114, 116, 119, 120, 122, 137, 140, 143, 147, 160, 161, 162, 163, 168, 171, 176, 182, 184, 191, 194, 195, 198, 203, 204, 207, 209, 211, 214, 220, 221, 222, 231, 235, 236;
Solvent Blue 4, 5, 6, 35, 38, 48, 59, 67, 70, 104, and 136.

6. The method for synthetizing a polymeric dye according to claim 1, wherein any one of C1-C4 can be a red chromophore unit derived from a commercial dye selected from the group consisting of:
Acid Red 1, 6, 8, 9, 13, 18, 27, 35, 37, 52, 54, 57, 73, 82, 88, 97, 97:1, 106, 111, 114, 118, 119, 127, 131, 138, 143, 143:1, 145, 151, 183, 195, 198, 211, 215, 217, 225, 226, 249, 251, 254, 256, 257, 260, 261, 265, 266, 274, 276, 277, 289, 296, 299, 315, 318, 336, 337, 357, 359, 361, 362, 364, 366, 399, 407, 415, 447;
Basic Red 1, 2, 9, 12, 13, 37;
Direct Red 2, 4, 9, 23, 24, 31, 54, 62, 69, 79, 80, 81, 83, 84, 89, 95, 212, 224, 225, 226, 227, 239, 242, 243, 254;
Disperse Red 1, 4, 5, 7, 11, 12, 13, 15, 17, 27, 43, 44, 50, 52, 53, 54, 55, 56, 58, 59, 60, 65, 72, 73, 74, 75, 76, 78, 81, 82, 86, 88, 90, 91, 92, 93, 96, 103, 105, 106, 107, 108, 110, 111, 113, 117, 118, 121, 122, 126, 127, 128, 131, 132, 134, 135, 137, 143, 145, 146, 151, 152, 153, 154, 157, 159, 164, 167, 169, 177, 179, 181, 183, 184, 185, 188, 189, 190, 191, 192, 200, 201, 202, 203, 205, 206, 207, 210, 221, 224, 225, 227, 229, 239, 240, 257, 258, 277, 278, 279, 281, 288, 298, 302, 303, 310, 311, 312, 320, 324, 328, 337, 343;
Food Red 2, 3, 7, 9, 14, 52, 87, 92, 94, 102, 104, 105, 106;
Reactive Red 2, 3, 5, 8, 11, 21, 22, 23, 24, 28, 29, 31, 33, 35, 43, 45, 49, 55, 56, 58, 65, 66, 78, 83, 84, 106, 111, 312, 113, 114, 116, 120, 123, 124, 128, 130, 136, 141, 147, 158, 159, 171, 174, 180,183, 184, 187, 190, 193, 194, 195, 198, 218, 220, 222, 223, 228, 235;
Solvent Red 1, 23, 29, 49, 119, 122, 125, 127, 130, 132, 135, 149, 160, 164, 168, 169, 172 and 233.

7. The method for synthetizing a polymeric dye according to claim 1, wherein any one of C1-C4 can be a green chromophore unit derived from a commercial dye selected from the group consisting of:
Acid Green 1, 3, 5, 9, 12, 16, 19, 20, 25, 27, 28, 40, 43, 50, 56, 73, 81, 84, 104, 108, 109;
Basic Green 1, 4, 5;
Direct Green 26, 28, 59, 80, 85;
Disperse Green 9;
Food Green 2, 3;
Reactive Green 5, 7, 8, 12, 15, 19, 21;
Solvent Green 1, 3, 7, and 11.

8. The method for synthetizing a polymeric dye according to claim 1, wherein any one of C1-C4 can be a chromophore unit derived from a commercial dye selected from the group consisting of:
Acid Yellow 1, 3, 11, 17, 18, 19, 23, 25, 36, 38, 40, 40:1, 42, 44, 49, 59, 59:1, 61, 65, 72, 73, 79, 99, 104, 110, 159, 169, 176, 184, 193, 200, 204, 207, 215, 219, 219:1, 220, 230, 232, 235, 241, 242, 246;
Basic Yellow 1, 2, 11, 12, 14, 21, 28, 32, 36, 57, 87;
Direct Yellow 4, 7, 8, 9, 10, 11, 12, 22, 27, 28, 39, 44, 50, 58, 59, 62, 79, 86, 87, 98, 105, 106, 130, 132, 137, 142, 147, 153;
Disperse Yellow 3, 4, 5, 7, 9, 13, 23, 24, 30, 33, 34, 42, 44, 49, 50, 51, 54, 56, 58, 60, 63, 64, 66, 68, 71, 74, 76, 79, 82, 83, 85, 86, 88, 90, 91, 93, 98, 99, 100, 104, 108, 114, 116, 118, 119, 122, 124, 126, 135, 140, 141, 149, 160, 162, 163, 164, 165, 179, 180, 182, 183, 184, 186, 192, 198, 199, 202, 204, 210, 211, 215, 216, 218, 224, 227, 231, 232;
Food Yellow 3, 4, 5;
Reactive Yellow 2, 3, 7, 15, 17, 18, 22, 23, 24, 25, 27, 37, 39, 42, 57, 69, 76, 81, 84, 85, 86, 87, 92, 95, 102, 105, 111, 125, 135, 136, 137, 142, 143, 145, 151, 160, 161, 165, 167, 168, 175, 176;
Solvent Yellow 2, 3, 7, 10, 13, 14, 19, 25, 28, 33, 88, 89, 114, 146, 163;
Acid Orange 3, 6, 7, 8, 10, 12, 19, 20, 24, 51, 56, 63, 67, 74, 80, 86, 87, 88, 89, 94, 95, 107, 108, 116, 122, 127, 140, 142, 144, 149, 152, 156, 162, 166, 168;
Basic Orange 2, 14, 15, 21, 22, 31, 69;
Direct Orange 6, 26, 27, 34, 39, 40, 46, 102, 105, 107, 118;
Disperse Orange 1, 3, 5, 7, 11, 13, 17, 20, 21, 25, 29, 30, 31, 32, 33, 37, 38, 42, 43, 44, 45, 46, 47, 48, 49, 50, 53, 54, 55, 56, 57, 58, 59, 61, 66, 71, 73, 76, 78, 80, 89, 90, 91, 93, 96, 97, 119, 127, 130, 139, 142;
Reactive Orange 1, 4, 5, 7, 11, 2, 13, 15, 16, 20, 30, 35, 56, 64, 67, 69, 70, 72, 74, 82, 84, 86, 87, 91, 92, 93, 95, 107;
Solvent Orange 1, 2, 3, 7, 11, 15, 20, 25, 54, 60, 62, 63, 86, 99, 105;
Acid Violet 7, 9, 17, 19, 21, 42, 43, 47, 48, 49, 54, 66, 78, 90, 97, 102, 109, 126;
Basic Violet 1, 2, 3, 4, 7, 10, 14;
Direct Violet 9, 35, 51, 66, 94, 95;
Disperse Violet 1, 4, 8, 23, 26, 27, 28, 31, 33, 35, 36, 38, 40, 43, 46, 48, 50, 51, 52, 56, 57, 59, 61, 63, 69, 77;
Food Violet 2;
Reactive Violet 1, 2, 4, 5, 6, 8, 9, 22, 23, 33, 36, 38;
Solvent Violet 8, 9, 11, 13, 14, and 38.

9. A polymeric dye obtained with the method for synthetizing a polymeric dye according to any one of claims 1 to 8, wherein said polymeric dye comprises at least one of said polymerizable monomer dye (I) to (III) and (V) copolymerized with said polymerizable monomer having formula (IV).

10. The polymeric dye according to claim 9, wherein said polymeric dye has a high solubility in an organic solvent at 25°C.

11. The polymeric dye according to claim 10, wherein said polymeric dye has a solubility in an organic solvent at 25°C of at least 1 wt%.

12. The polymeric dye according to claim 11, wherein said polymeric dye has a solubility in water at 25°C of less than 0.1 wt%.

13. An ink composition comprising the polymeric dye according to any one of claims 9 to 12, wherein said composition is a liquid composition, a dispersion composition, an emulsion composition, or a solid composition.

14. The ink composition according to claim 13, wherein said ink composition is a liquid composition comprising said polymeric dye and an organic solvent, and wherein said polymeric dye is in an amount of from 1% to 70%, preferably from 3% to 50%, by weight said ink composition.

15. The ink composition according to claim 13, wherein said ink composition is a solid composition comprising said polymeric dye and a fusible carrier, and wherein said polymeric dye is in an amount of from 1% to 70%, preferably from 3% to 50%, by weight said ink composition.
